# EUROPEAN PATENT SPECIFICATION

(11) **EP 3 772 877 B1**
(45) Date of publication and mention of the grant of the patent: **20.10.2021**
(21) Application number: 18783381.9
(22) Date of filing: 25.09.2018
(51) Int. Cl.: A01B 1/04, A01D 11/06

(54) **GARDENING TOOL**
GARTENWERKZEUG
OUTIL DE JARDINAGE

(30) Priority: 27.03.2018 DE 102018002500
(43) Date of publication of application: 17.02.2021
(73) Proprietor: HUSQVARNA AB, 561 82 Huskvarna (SE)
(72) Inventor: KOHL, Peter, 89257 Illertissen (DE)
(74) Representative: Finkele, Rolf
(86) International application number: PCT/EP2018/075906
(87) International publication number: WO 2019/185180

(56) References cited:
- WO-A1-2005/065439
- WO-A1-2010/000059
- DE-A1-102014 102 912
- TW-U- M 515 764
- US-A- 5 417 044
- US-A- 5 799 998

## Description

### TECHNICAL FIELD

The present disclosure relates to gardening tools. More specifically, the present disclosure relates to the gardening tools which provide better ergonomics and operational benefits in a user-friendly manner.

### BACKGROUND

Gardening tools find ubiquitous applications in many outdoor applications. Rake shovel is one of such gardening tools which is used for multiple garden care activities in gardens and the likes. A conventional rake shovel includes a rake portion with multiple straight tines along with a shovel portion for shoveling purposes. However, there have been concerns regarding structural constraints, particularly stresses on or around the shovel portion of the rake shovel during some operations.

During operation of the rake shovel, angle of the handle has a bearing on multiple factors. There have been efforts in the past to work with different angles (with respect to ground surface) or position of the handle with respect to the shovel portion or the rake portion. But, such efforts were not able to fully address some of the major problems associated with the conventional rake shovel namely stress on the handle and the shovel portion or an amount of volume which may be carried by the shovel portion. Moreover, both these problems pose hindrance in an optimum and user-friendly working of this gardening tool.

An example of a gardening tool is provided in WO application 2005,065,439 (hereinafter referred to as '439 reference). The '439 reference provides a multi-functional gardening tool which includes a handle with a working member on an outer end. The working member comprises a first blade-like part with which it is connected to the outer end of the handle. The working member further comprises a second blade-like part with a number of at least substantially parallel tines lying in a blade plane, where the second part extends from the first part. The first and second blade-like parts of the working member together enclose an obtuse angle. However, the '439 reference falls short of optimizing the structural efficiency of the handle of the gardening tool due to angular limitation between the first and second blade-like parts. This limitation may also have a bearing on the volume carrying capacity of the second blade-like part.
An example is provided by U.S. patent reference 5,417,044 which discloses a horse mucking rake device. It includes a substantially straight, elongated handle as well as a base frame and a plurality of tines and, finally, a cage. The base frame is connected to the handle and extends outwardly at right angles from the handle at its area of connection in a substantially flat plane to establish a predetermined framed width. The tines extend from the base frame at right angles to the frame width and each of the tines are parallel to one another and have an upper segment and a lower segment. The upper segment is connected at its top to the base frame and its bottom is connected to the top of the lower segment. The lower segment ends in a terminus, that is, a tip or ending. The upper segment of each of the tines runs in a direction parallel to the handle and the lower segment of each of the tines forms an angle with an imaginary axis extending from the handle of about 30° to about 60°. The front of the cage forms an angle relative to the bottom of the cage which substantially is equal to the angle formed by the lower segments of the tines relative to the handle.

Another example is provided by U.S. patent 5,799,998 disclosing a wall assembly having a rear wall and two spaced-apart side walls extending from the rear wall, that are positioned relative to a hay fork of conventional design. An opening through the mounting flange receives a fastener to secure the wall assembly to the handle of a hay fork. A resilient latch near the forward end of each side wall is capable of engaging a tine of a hay fork to further secure the wall assembly to the fork. Thus, there is a need of an improved gardening tool suitable for multiple jobs while ensuring a balanced and convenient operation.

Document TW M515764 U discloses a further gardening tool comprising a handle 40 having a first end and a second end and an implement 10 coupled to the handle 40 towards the first end of the handle 40. The implement 10 includes a rake portion having a plurality of substantially parallel tines defining a tine plane and a shovel portion coupled to the rake portion such that the shovel portion includes a first angle with the tine plane. The first end of the handle 40 is coupled to the rake portion such that the handle includes a second angle with the tine plane.

### SUMMARY

In view of the above, it is an objective of the present invention to solve or at least reduce the drawbacks discussed above. The objective is at least partially achieved by a gardening tool according to claim 1. The gardening tool includes a handle having a first end and a second end. The gardening tool includes an implement coupled to the handle towards the first end of the handle. Further, the implement includes a rake portion having a plurality of substantially parallel tines defining a tine plane. And, the implement includes a shovel portion coupled to the rake portion such that the shovel portion includes a first angle with the tine plane. The first end of the handle is coupled to the rake portion such that the handle includes a second angle with the tine plane. Further, the first angle is not equal to the second angle. Thus, the present disclosure provides a simple, compact, and ergonomic gardening tool which allows benefits of multiple operations without compromising with structural integrity.

The rake portion further defines a slot to receive an engaging member of the gardening tool. This will ensure a secure engagement between the rake portion and the handle for a safe and secure operation.

The shovel portion defines a recess for passage of the handle in the shovel portion. This is desirable to allow change in the second angle of the handle with respect to the shovel portion as may be required for various applications of the gardening tool.

The engaging member engages with the first end of the handle. This allows use of a substantially straight handle for the gardening tool with benefits such as better ergonomics, reduced cost and wherewithal.

According to an embodiment of the present invention, the first angle is 55°. The value of the first angle, other than that of the present embodiment, may be selected in consideration of the stress and volume capacity of the shovel portion among other factors as applicable to the type of application.

According to an embodiment of the present invention, the second angle is in the range of 32 - 52°. The second angle will largely have a bearing on user comfort and ergonomic handling of the handle of the gardening tool. So, option of different values of the second angle may make the gardening tool more applicable to suit desired height requirements of different users.

According to an embodiment of the present invention, the second angle is 42°. The value of the second angle, other than that of the present embodiment, may be selected in consideration of the stress on the handle along with factors such as stress, volume capacity of the shovel portion among others.

According to an embodiment of the present invention, the handle is made of wood. Choice of material for the handle portion will have a bearing on grip and life of the handle part from economical and maintenance considerations.

According to an embodiment of the present invention, the handle defines a handgrip portion towards the second end of the handle. The handgrip portion can be highly desirable for more demanding and shock-prone applications of the gardening tool to provide a buffer to users.

According to an embodiment of the present invention, the gardening tool further includes a reinforced structure between the rake portion and the shovel portion. Role of the reinforced structure is to further strengthen coupling of the tines of the rake portion with the shovel portion.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a gardening tool, in accordance with an embodiment of the present invention;
**FIG. 2** shows a side view of one side of the implement of the gardening tool, in accordance with an embodiment of the present invention;
**FIG. 3** shows a perspective view of the implement of the gardening tool, in accordance with an embodiment of the present invention;
**FIG. 4** shows a side view of an implement of the gardening tool, in accordance with an embodiment of the present invention; and
**FIG. 5** shows a side view of the implement of the gardening tool, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention as defined by the claims to those skilled in the art. For example, one or more aspects of the present invention can be utilized in other embodiments. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

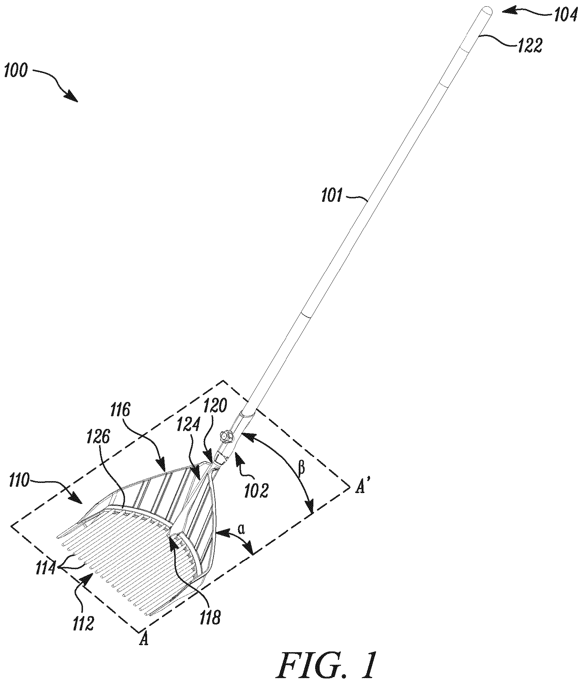

**FIG. 1** illustrates a gardening tool **100.** The present disclosure generally makes reference to a rake shovel.

As illustrated in this figure, the gardening tool **100** includes a handle **101** which has a first end **102** and a second end **104.** The gardening tool **100** includes an implement **110** coupled to the handle **101** towards the first end **102** of the handle **101.** Further, the implement **110** includes a rake portion **112** having a plurality of substantially parallel tines **114** defining a tine plane **A-A'.** Generally, number and dimensions of the tines **114** is expected to be in accordance with application of the gardening tool **100** and the present disclosure is not to be limited by number and configuration of the tines **114** in any manner.

The implement **110,** in accordance with an implementation of the present disclosure, includes a shovel portion **116** coupled to the rake portion **112.** As illustrated, the shovel portion **116** includes a first angle **α** with the tine plane **A-A'.** The first end **102** of the handle **101** is coupled to the rake portion **112** such that the handle **101** includes a second angle **β** with the tine plane **A-A'.** As is evident from various illustrations, the first angle **α** is not equal to the second angle **β**. Preferably, the first angle **α** is larger than the second angle **β** to obtain combined benefit of better ergonomics and stress profile of the handle **101** along with improved transported volume capacity of the shovel portion **116** of the gardening tool **100.**

As illustrated, the first angle **α** is greater than the second angle **β**. In some embodiments, the first angle **α** can be in the range of 45 - 65°. By performing desired changes to the first angle **α**, the shovel portion **116** can be setup to suit any different application, or for any other role, of the gardening tool **100.** Further, the second angle **β** can be in the range of 32 - 52°. The second angle **β** roughly has a bearing on accessibility of the second end **104** of the handle **101** during working of the gardening tool **100.** The option of different values of the first angle **α** and the second angle **β** are to make the gardening tool **100** more applicable to suit desired shoveling or height requirements of different users.

The rake portion **112** further defines a slot **118** to receive an engaging member **120** of the gardening tool **100.** This will ensure a secure engagement between the rake portion **112** and the handle **101** for a safe and secure operation. Moreover, the engaging member **120** allows ease of assembly or disassembly of different handles to suit different applications of the gardening tool **100.** In some embodiments, the handle **101** defines a handgrip portion **122** towards the second end **104** of the handle **101.** The handgrip portion **122** such as a D-grip, may be highly desirable for more demanding and shock-prone applications of the gardening tool **100** to provide a buffer to users. Moreover, the handle **101** can be made of materials such as wood, plastic, polymers, aluminum or any other material as known or used in the relevant art. Choice of material for the handle **101** may have a bearing on grip, for applications with the handgrip portion **122,** and, as a result, on life of the handle **101.**

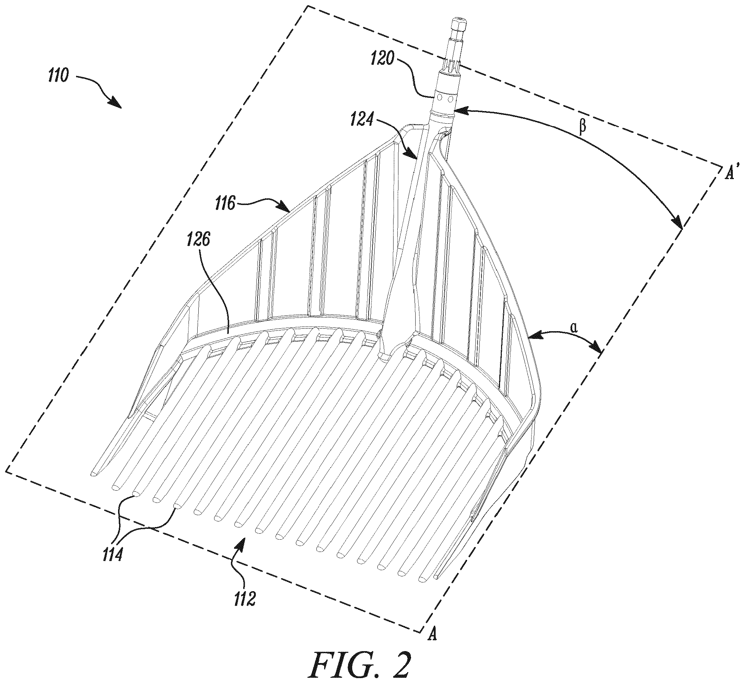

**FIG. 2** shows an implement **110** of the gardening tool **100,** in accordance with an embodiment of the present invention. The shovel portion **116** defines a recess **124** for passage of the handle **101.** This is provided to bring about the difference between the first angle **α** and the second angle **β** of the shovel portion **116** and the handle **101,** respectively. This is expected to provided benefits related to ergonomic and applications considerations of the gardening tool **100.** The gardening tool **100** further includes a reinforced structure **126** between the rake portion **112** and the shovel portion **116.** As illustrated, the reinforced structure **126** may have a substantially circular-profile to further strengthen the shovel portion **116** as well as the tines **114** of the rake portion **112** during shoveling, raking and like operations.

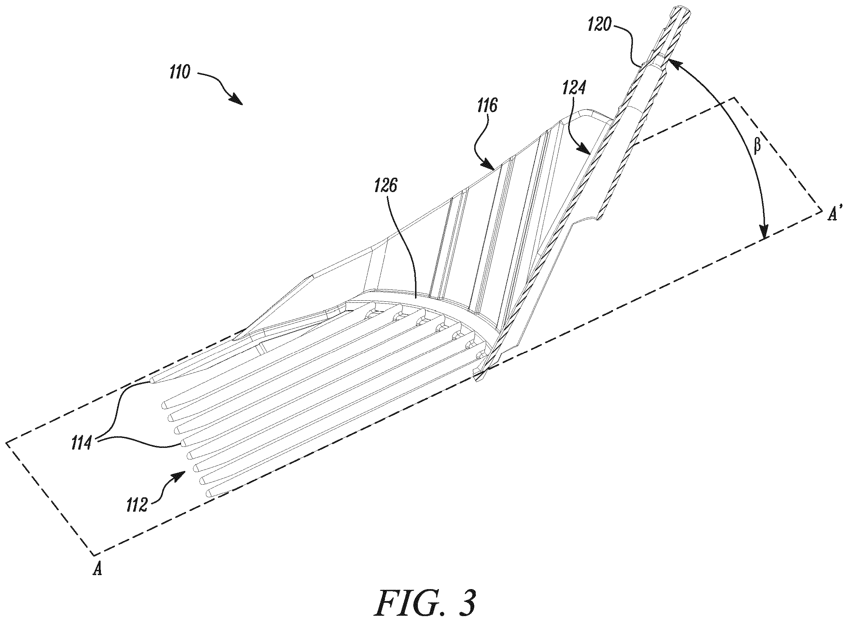

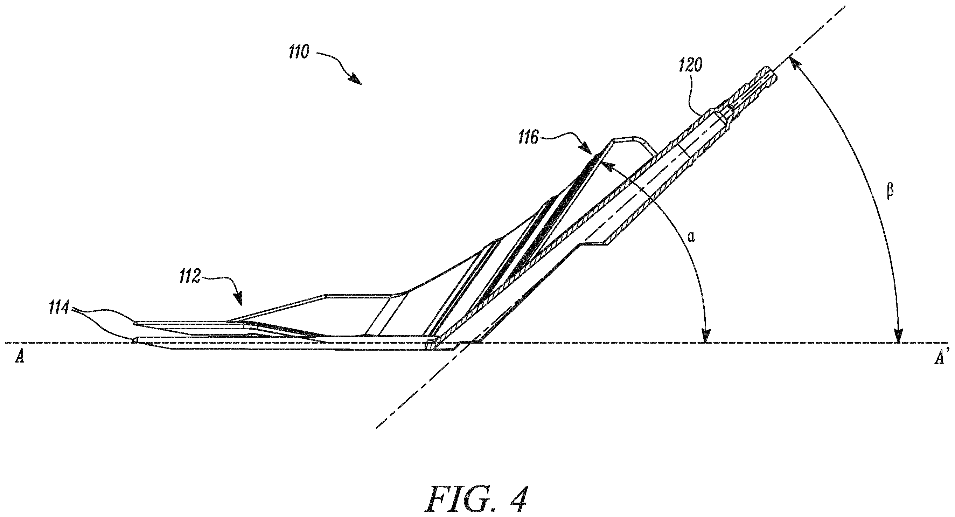

In accordance with some embodiments of the present invention, **FIGS. 3** and **4** show a perspective view and a side view, respectively, of the implement **110** of the gardening tool **100.** As further highlighted by the present figures, the first angle **α** is not equal to the second angle **α**. In an embodiment, the first angle **α** can be 55 °. Further, the second angle **β** can be 42°. These values are preferable, although, the present disclosure can be readily applicable with other values of the first angle **α** and the second angle **β** which may be applicable with various aspects of the present disclosure. The value of the first angle **α** and the second angle **β** may be selected in consideration of factors such as ergonomics, life, maintenance, stress profiles, volume or any other factor involved, as evident to a person having knowledge in the art, in working of the gardening tool **100.**

As used herein, the first angle **α** and the second angle **β** of the present disclosure may be decided based on volume capacity and stress profile, among other crucial working parameters involves with the gardening tool **100,** particularly the handle **101** and the shovel portion **116.** For example, a very high (say obtuse) value of the first angle **α** may lead to compromise with the volume capacity of the shovel portion **116** among other limitations. Moreover, a very high or low value of the second angle **β** of the handle **101** may lead to undesired stress on any of the handle **101** or shovel portion **116** or the rake portion **112,** depending upon placement or engagement of the handle **101** within the gardening tool **100.**

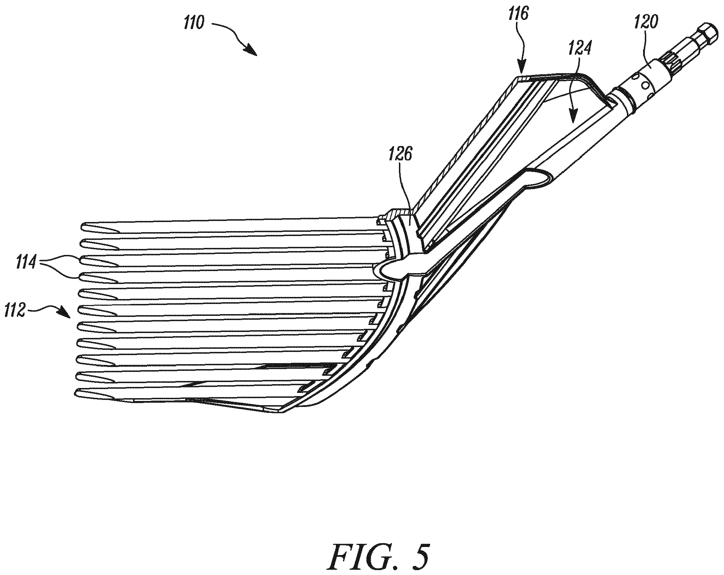

**FIG. 5** shows a side view of the implement **110** of the gardening tool **100,** in accordance with an embodiment of the present invention. The engaging member **120** engages with the first end **102** of the handle **101.** This allows use of a substantially straight handle **101** for the gardening tool **100** with benefits such as better ergonomics and wherewithal. A straight handle is generally inexpensive and does not require incorporation of any special ergonomic design to be applicable with various aspects of the present disclosure. The present disclosure may make reference to use of the straight handle **101** but handles of other shapes such as curved, bent and the like have been contemplated and are well within the scope of the present disclosure.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Gardening Tool
- **101**: Handle
- **102**: First End
- **104**: Second End
- **110**: Implement
- **112**: Rake Portion
- **114**: Tines
- **116**: Shovel Portion
- **118**: Slot
- **120**: Engaging Member
- **122**: Handgrip Portion
- **124**: Recess
- **126**: Reinforced Structure
- **A-A'**: Tine Plane
- **A**: First Angle
- **B**: Second Angle

## Claims

1. A gardening tool **(100)** comprising:
a handle **(101)** having a first end **(102)** and a second end **(104);** and
an implement **(110)** coupled to the handle **(101)** towards the first end **(102)** of the handle **(101),** wherein the implement **(110)** includes:
a rake portion **(112)** having a plurality of substantially parallel tines **(114)** defining a tine plane **(A-A');** and
a shovel portion **(116)** coupled to the rake portion **(112)** such that the shovel portion **(116)** includes a first angle (**α**) with the tine plane **(A-A');**
the first end **(102)** of the handle **(101)** is coupled to the rake portion **(112)** such that the handle **(101)** includes a second angle (**β**) with the tine plane **(A-A');** and the first angle (**α**) is not equal to the second angle (**β**)
**characterized in that:**
the rake portion **(112)** further defines a slot **(118)** to receive an engaging member **(120)** of the gardening tool **(100),** whereby the engaging member (120) extends via a recess **(124)** defined by the shovel portion **(116)** and engages with the first end **(102)** of the handle **(101).**

2. The gardening tool **(100)** of claim **1,** wherein the first angle (**α**) is greater than the second angle **(β).**

3. The gardening tool **(100)** of claim **1,** wherein the first angle **(α)** is in the range of 45 - 65°.

4. The gardening tool **(100)** of claims **1** to **3,** wherein the first angle (**α**) is 55°.

5. The gardening tool **(100)** of claims **1** and 2, wherein the second angle **(β)** is in the range of 32 - 52°.

6. The gardening tool **(100)** of claims **1, 2** and **5,** wherein the second angle **(β)** is 42°.

7. The gardening tool **(100)** of claims **1** to **6,** wherein the handle **(101)** is made of wood.

8. The gardening tool **(100)** of claims **1** to **7**, wherein the handle **(101)** defines a handgrip portion **(122)** towards the second end **(104)** of the handle **(101).**

9. The gardening tool **(100)** of any of the preceding claims, wherein the gardening tool **(100)** further includes a reinforced structure **(126)** between the rake portion **(112)** and the shovel portion **(116).**

## Patentansprüche

1. Gartenwerkzeug (100), umfassend:
einen Griff (101) mit einem ersten Ende (102) und einem zweiten Ende (104); und
ein Arbeitswerkzeug (110), das mit dem Griff (101) in Richtung des ersten Endes (102) des Griffs (101) gekoppelt ist, wobei das Arbeitswerkzeug (110) umfasst:
einen Kammabschnitt (112) mit einer Vielzahl von im Wesentlichen parallelen Zinken (114), die eine Zinkenebene (A-A') definieren; und
einen Schaufelabschnitt (116), der mit dem Kammabschnitt (112) gekoppelt ist, so dass der Schaufelabschnitt (116) einen ersten Winkel (α) mit der Zinkenebene (A-A') einschließt;
wobei das erste Ende (102) des Griffs (101) mit dem Kammabschnitt (112) gekoppelt ist, so dass der Griff (101) einen zweiten Winkel (β) mit der Zinkenebene (A-A') einschließt; und der erste Winkel (α) nicht gleich dem zweiten Winkel (β) ist,
**dadurch gekennzeichnet, dass**
der Kammabschnitt (112) ferner einen Schlitz (118) definiert, um ein Eingriffselement (120) des Gartenwerkzeugs (100) aufzunehmen, wobei sich das Eingriffselement (120) über eine durch den Schaufelabschnitt (116) definierte Aussparung (124) erstreckt und in das erste Ende (102) des Griffs (101) eingreift.

2. Gartenwerkzeug (100) nach Anspruch 1, wobei der erste Winkel (α) größer als der zweite Winkel (β) ist.

3. Gartenwerkzeug (100) nach Anspruch 1, wobei der erste Winkel (α) im Bereich von 45-65º liegt.

4. Gartenwerkzeug (100) nach den Ansprüchen 1 bis 3, wobei der erste Winkel (α) 55° beträgt.

5. Gartenwerkzeug (100) nach den Ansprüchen 1 und 2, wobei der zweite Winkel (β) im Bereich von 32-52º liegt.

6. Gartenwerkzeug (100) nach den Ansprüchen 1, 2 und 5, wobei der zweite Winkel (β) 42° beträgt.

7. Gartenwerkzeug (100) nach den Ansprüchen 1 bis 6, wobei der Griff (101) aus Holz besteht.

8. Gartenwerkzeug (100) nach den Ansprüchen 1 bis 7, wobei der Griff (101) einen Handgriffabschnitt (122) in Richtung des zweiten Endes (104) des Griffs (101) definiert.

9. Gartenwerkzeug (100) nach einem der vorhergehenden Ansprüche, wobei das Gartenwerkzeug (100) ferner eine verstärkte Struktur (126) zwischen dem Kammabschnitt (112) und dem Schaufelabschnitt (116) umfasst.

## Revendications

1. Outil de jardinage (100) comprenant :
un manche (101) ayant une première extrémité (102) et une seconde extrémité (104) ; et
un outil (110) couplé au manche (101) vers la première extrémité (102) du manche (101), où l'outil (110) comprend :
une partie de râteau (112) ayant une pluralité de dents (114) sensiblement parallèles définissant un plan de dents (A-A') ; et
une partie de pelle (116) couplée à la partie de râteau (112) de telle sorte que la partie de pelle (116) comprend un premier angle (α) avec le plan de dents (A-A') ;
la première extrémité (102) du manche (101) est couplée à la partie de râteau (112) de telle sorte que le manche (101) comprend un second angle (β) avec le plan de dents (A-A') ; et le premier angle (α) n'est pas égal au second angle (β)
**caractérisé en ce que** :
la partie de râteau (112) définit en outre une fente (118) pour recevoir un élément d'engagement (120) de l'outil de jardinage (100), moyennant quoi l'élément d'engagement (120) s'étend via un évidement (124) défini par la partie de pelle (116) et s'engage avec la première extrémité (102) du manche (101).

2. Outil de jardinage (100) selon la revendication 1, où le premier angle (α) est supérieur au second angle (β).

3. Outil de jardinage (100) selon la revendication 1, où le premier angle (α) est dans la plage de 45 à 65°.

4. Outil de jardinage (100) selon les revendications 1 à 3, où le premier angle (α) est de 55°.

5. Outil de jardinage (100) selon les revendications 1 et 2, où le second angle (β) est compris entre 32 et 52°.

6. Outil de jardinage (100) selon les revendications 1, 2 et 5, où le second angle (β) est égal à 42°.

7. Outil de jardinage (100) selon les revendications 1 à 6, où le manche (101) est réalisé en bois.

8. Outil de jardinage (100) selon les revendications 1 à 7, où le manche (101) définit une partie de manche (122) vers la seconde extrémité (104) du manche (101).

9. Outil de jardinage (100) selon l'une quelconque des revendications précédentes, où l'outil de jardinage (100) comprend en outre une structure renforcée (126) entre la partie de râteau (112) et la partie de pelle (116).
